(19) Europäisches Patentamt
European Patent Office
Office européen des brevets

(11) EP 1 850 877 B1

(12) **EUROPEAN PATENT SPECIFICATION**

(45) Date of publication and mention of the grant of the patent:
**27.08.2008 Bulletin 2008/35**

(21) Application number: **06708067.1**

(22) Date of filing: **07.02.2006**

(51) Int Cl.:
***A61K 47/48*** *(2006.01)* ***C08F 8/00*** *(2006.01)*
***C08G 65/329*** *(2006.01)*

(86) International application number:
**PCT/EP2006/050720**

(87) International publication number:
**WO 2006/084842 (17.08.2006 Gazette 2006/33)**

(54) **PROCESS FOR THE PREPARATION OF ALKOXYAMINE FUNCTIONALISED POLYETHYLENE GLYCOLS**

VERFAHREN ZUR HERSTELLUNG VON MIT ALKOXYAMIN FUNKTIONALISIERTEN POLYETHYLENGLYKOLEN

PROCEDE POUR LA PREPARATION DE POLYETHYLENEGLYCOLS FONCTIONNALISES AVEC UNE ALCOXYAMINE

(84) Designated Contracting States:
**AT BE BG CH CY CZ DE DK EE ES FI FR GB GR HU IE IS IT LI LT LU LV MC NL PL PT RO SE SI SK TR**

(30) Priority: **08.02.2005 EP 05388010**

(43) Date of publication of application:
**07.11.2007 Bulletin 2007/45**

(73) Proprietor: **NOVO NORDISK A/S**
**2880 Bagsvaerd (DK)**

(72) Inventor: **DÖRWALD, Florencio, Zaragoza**
**DK-2765 Smørum (DK)**

(56) References cited:
**WO-A-00/75105**

- **GAERTNER H F ET AL: "SITE-SPECIFIC ATTACHMENT OF FUNCTIONALIZED POLY (ETHYLENE GLYCOL) TOTHE AMINO TERMINUS OF PROTEINS" BIOCONJUGATE CHEMISTRY, ACS, WASHINGTON, DC, US, vol. 7, no. 1, 1996, pages 38-44, XP000646874 ISSN: 1043-1802**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 850 877 B1

**Description**

**FIELD OF THE INVENTION**

The present invention relates to methods of preparing alkoxyamine-functionalised polyethylene glycol.

**BACKGROUND OF THE INVENTION**

A well-known method for conjugation of peptides, e.g., to improve their pharmacological properties, comprises the step reacting an alkoxyamine functionalised polyethylene glycol (PEG) with a peptide derived aldehyde or ketone to provide a peptide covalently linked to PEG via an oxime bond. For a review, see Roberts, M.J. et. al, Adv. Drug Deliv. Rev. 2002, 54, 459-476, Kinstler, O. et al., Adv. Drug Deliv. Rev. 2002, 54, 477-485.

Alkoxyamine functionalised PEG are normally prepared by treatment of a Boc-(aminoxy)acetyl derivative with a PEG-derived amine, followed by acid mediated removal of the Boc group, as described by Gaertner and Offord, Bioconjugate Chem.,7, 38-44, 1996. Most commercially available PEG-derivatives are acylating agents, *i.e.*, carboxylic acid derivatives, and the preparation of PEG-derived alkoxylamine derivatives may require the use of a diamine-spacer, and thus several synthetic operations and purifications of intermediates, as outlined in the Scheme below. Such multistep procedure are tedious and time-consuming, and lower the yield of final product. The monoacylation of a diamine may lower the yield of final product signigicantly, because such reactions usually yield as byproduct a diacylated diamine (Jacobson et al., J. Org. Chem. 1987, 52, 2592).

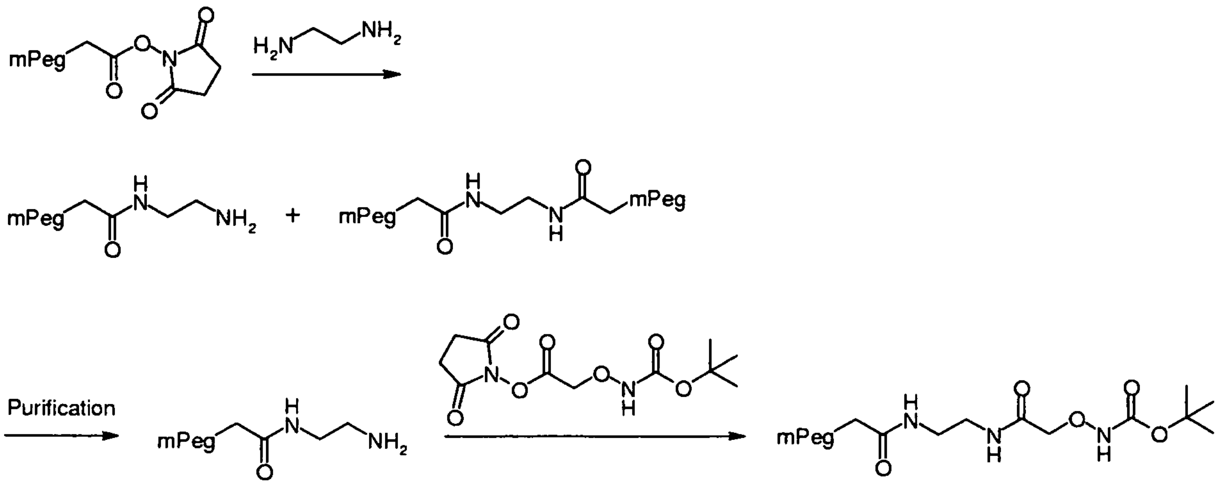


There is thus a need for the provision of simple, fast and efficient methods for the preparation of alkoxyamine functionalised PEG, ideally in one or two synthetic steps.

**SUMMARY OF THE INVENTION**

The present invention has surprisingly found that alkoxyamine functionalised PEG may be prepared in a reaction between an excess of an amine containing a protected alkoxyamine functionality and a readily available, PEG-derived acylating agent, followed by removal of un-reacted amine by means of an acidic ion exchange resin.

The present invention thus provides a method for preparing a compound according to formula I,

$$R^1\text{-}R^2\text{-O-NH}_2 \qquad \text{(I)}$$

wherein $R^1$ is a monovalent acyl radical of formula

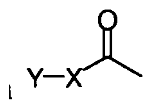
,

wherein X represents a bond, arylene, $(CH_2)_{1-10}$, NH, O, S, or combinations thereof, and
Y represents a branched or unbranched PEG-derived radical having a mean molecular weight between 100 Da and 80 kDa; and

$R^2$ is a diradical of formula

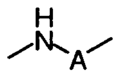,

wherein A represents arylene, alkylene, cycloalkylene, heteroarylene, partially or completely saturated heteroarylene, or combinations thereof, each of which optionally substituted with a lower alkyl, the method comprising the steps of

(i) treating a compound of formula II

$R^1$-LG (II),

wherein LG represents a leaving group for nucleophilic displacement, with an excess of a compound of formula III

H-$R^2$-O-NH-Pg (III)

wherein Pg represent a protective group in a suitable solvent or solvent mixture;

(ii) isolating any compound of formula (IV)

$R^1$-$R^2$-O-NHPg (IV);

and

(iii) removing the protective group to obtain a compound of formula I.

In one embodiment, the present invention relates to a method for the preparation of compounds accordingly to formula I,

$R^1$-$R^2$-O-$NH_2$ (I)

wherein $R^1$ represents

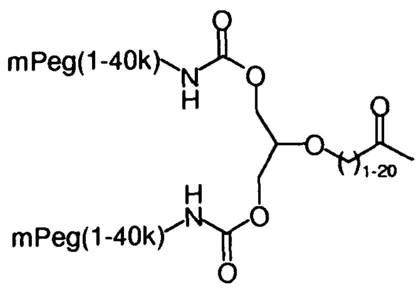,

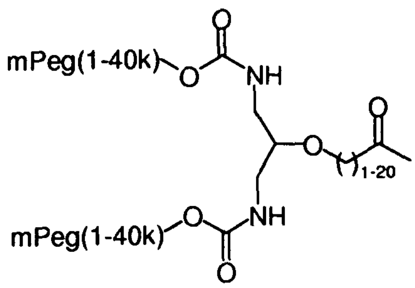,

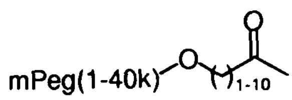,

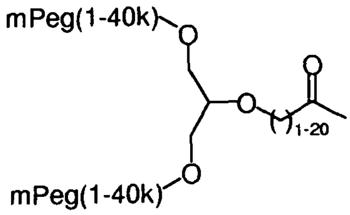, 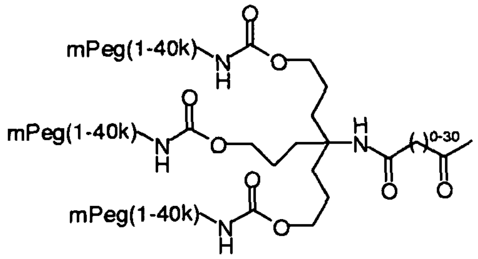, 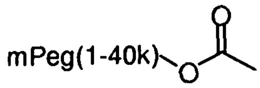,

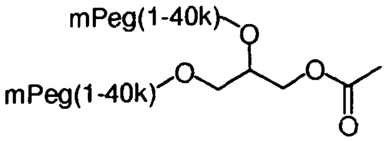 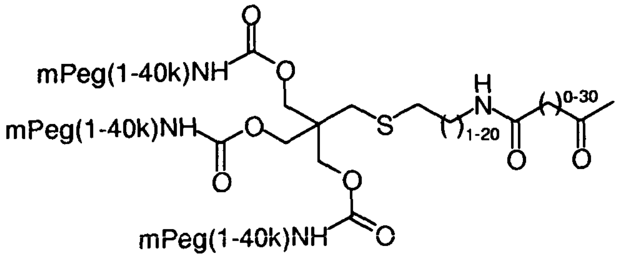,

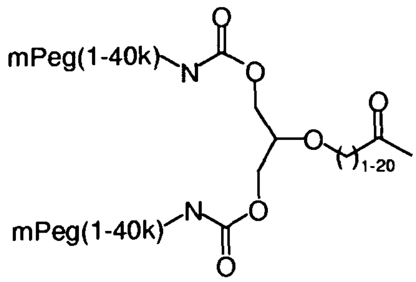, 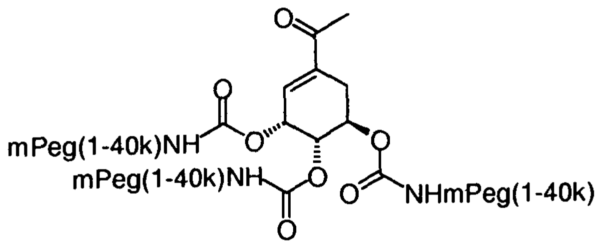,

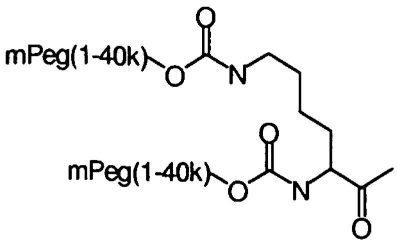, 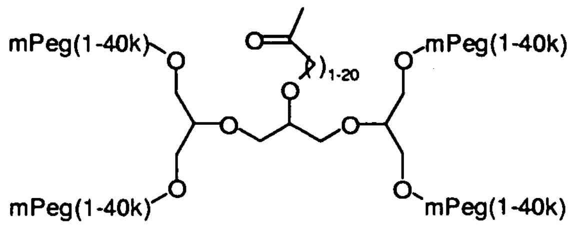,

or

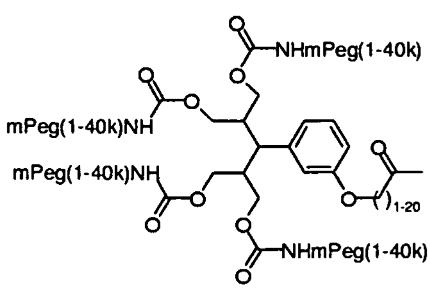,

$R^2$ represents

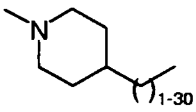, 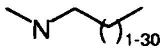, 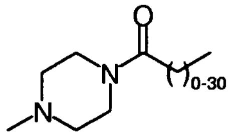, or 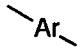

wherein Ar represents arylene or heteroarylene, both of which may optionally be substituted with one or more substituents selected from carboxy, hydroxyl, nitro, or cyano, the method comprising the steps of

(a) treating a compound of formula II

$R^1$-LG (II),

wherein LG represent a leaving group for nucleophilic displacement, with an excess of a compound of the formula (III)

H-$R^2$-O-NH-Pg (III),

wherein Pg represents a protective group, in a suitable solvent or solvent mixture, followed by

(b) precipitation of the product obtained in (a) by addition of a large amount of a suitable solvent, in which the compound of formula (IV) is essentially insoluble, and the reaction solvent and the compound of general formula (III) are soluble, wherein the compound of formula (IV) is the compound of formula I with a protection group, *i.e.*

$R^1$-$R^2$-O-NHPg (IV)

followed by,

(c) isolation of the compound of formula (IV) by filtration, followed by

(d) addition of a suitable solvent in which the compound of formula (IV) is soluble to the product isolated in step (c), followed by

(e) optional repetition of the precipitation, filtration and solubilisation steps of (b) and (c), followed by

(f) addition of a suspension of an acidic ion exchange resin in a suitable solvent, stirring the resulting mixture, followed by filtration and rinsing of the ion exchange resin, and collection and optional concentration of the combined filtrates, followed by

(g) optional addition of a suitable solvent to precipitate the compound of formula (IV), followed by filtration and solubilisation as described in steps (b) and (c), followed by

(h) removal of the protective group with a suitable reagent to obtain a compound of formula I, and optional removal of the solvent and un-reacted reagent.

**DEFINITIONS**

The term "alkane" is intended to indicate a saturated, linear, branched and/or cyclic hydrocarbon. Unless specified with a number of carbon atoms, the term is intended to indicate hydrocarbons with from 1 to 30 (both 1 and 30 included) carbon atoms, such as 1 to 20 (both included), such as from 1 to 10 (both 1 and 10 included), *e.g.*, from 1 to 5 (both 1 and 5 included). The terms alkyl and alkylene refer to the corresponding radical and bi-radical, respectively.

The term "aryl" as used herein is intended to indicate carbocyclic aromatic ring systems comprising one or more rings, such as phenyl, biphenylyl, naphthyl, anthracenyl, phenanthrenyl, fluorenyl, indenyl, pentalenyl and azulenyl. Aryl is also intended to include the partially hydrogenated derivatives of the multi-ring carbocyclic systems enumerated above, wherein at least one ring is aromatic. Examples of such partially hydrogenated derivatives include 1,2,3,4-tetrahydronaphthyl and 1,4-dihydronaphthyl. The term "arylene" is intended to indicate the corresponding bi-radical, and examples include 1,2-phenylene, 1,3-phenylene, 1,4-phenylene, 1,2-naphthylene, 1,4-naphthylene, 4,4’-biphenylene, 4,4"-terphenylene and 4,4"’-quaterphenylene.

The term "heteroaryl" as used herein is intended to indicate radicals of heterocyclic aromatic ring systems containing one or more heteroatoms selected from nitrogen, oxygen and sulphur, such as furyl, thienyl, pyrrolyl, oxazolyl, thiazolyl, imidazolyl, isoxazolyl, isothiazolyl, 1,2,3-triazolyl, 1,2,4-triazolyl, pyranyl, pyridyl, pyridazinyl, pyrimidinyl, pyrazinyl, 1,2,3-triazinyl, 1,2,4-triazinyl, 1,3,5- triazinyl, 1,2,3-oxadiazolyl, 1,2,4-oxadiazolyl, 1,2,5-oxadiazolyl, 1,3,4-oxadiazolyl, 1,2,3-thiadiazolyl, 1,2,4-thiadiazolyl, 1,2,5-thiadiazolyl, 1,3,4-thiadiazolyl, tetrazolyl, thiadiazinyl, indolyl, isoindolyl, benzofuryl, benzothienyl, indazolyl, benzimidazolyl, benzthiazolyl, benzisothiazolyl, benzoxazolyl, benzisoxazolyl, purinyl, quinazolinyl, quinolizinyl, quinolinyl, isoquinolinyl, quinoxalinyl, naphthyridinyl, pteridinyl, carbazolyl, azepinyl, diazepinyl, acridinyl and the like. The term is also intended to include partially hydrogenated derivatives of the multi-ring heterocyclic systems enumerated above, provided at least one ring comprising a hetero atom is aromatic. Examples of such partially hydrogenated derivatives include 2,3-dihydrobenzofuranyl, pyrrolinyl, pyrazolinyl, indolinyl, oxazolidinyl, oxazolinyl and oxazepinyl. The term "heteroarylene" is intended to indicate the corresponding bi-radical, and examples include 1,2,4-pyrazol-2,5-diyl, imidazol-1,2-diyl, thiazol-2,4-diyl, (4-phenylimidazole)-4,1’-diyl and (3,5-diphenyl-1,2,4-oxadiazole)-4,4"-diyl.

The term "PEG" is intended to indicate polyethylene glycol of a molecular weight between approximately 100 and approximately 1,000,000 Da, including analogues thereof, wherein for instance the terminal OH-group has been replaced by an alkoxy group, such as e.g. a methoxy group, an ethoxy group or a propoxy group. In particular, the PEG wherein the terminal -OH group has been replaced by methoxy is refered to as mPEG.

The term "mPEG" (or more properly "mPEGyl") means a polydisperse or monodisperse radical of the structure

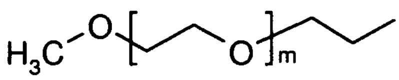

wherein m is an integer larger than 1. Thus, an mPEG wherein m is 90 has a molecular weight of 3991 Da, *i.e.* approx 4kDa. Likewise, an mPEG with an average molecular weight of 20 kDa has an average m of 454. Due to the process for producing mPEG these molecules often have a distribution of molecular weights. This distribution is described by the polydispersity index.

The term "polydispersity index" as used herein means the ratio between the weight average molecular weight and the number average molecular weight, as known in the art of polymer chemistry (see *e.g.* "Polymer Synthesis and Characterization", J.A. Nairn, University of Utah, 2003). The polydispersity index is a number which is greater than or equal to one, and it may be estimated from Gel Permeation Chromatographic data. When the polydispersity index is 1, the product is monodisperse and is thus made up of compounds with a single molecular weight. When the polydispersity index is greater than 1 it is a measure of the polydispersity of that polymer, *i.e.* how broad the distribution of polymers with different molecular weights is.

The use of for example "mPEG20000" in formulas, compound names or in molecular structures indicates an mPEG residue wherein mPEG is polydisperse and has a molecular weight of around 20 kDa.

The polydispersity index typically increases with the molecular weight of the PEG or mPEG. When reference is made to 5 kDa PEG and in particular 5 kDa mPEG it is intended to indicate a compound (or in fact a mixture of compounds) with a polydisperisty index below 1.06, such as below 1.05, such as below 1.04, such as below 1.03, such as between 1.02 and 1.03. When reference is made to 10 kDa PEG and in particular 10 kDa mPEG it is intended to indicate a compound (or in fact a mixture of compounds) with a polydisperisty index below 1.06, such as below 1.05, such as below 1.04, such as below 1.03, such as between 1.02 and 1.03. When reference is made to 15 kDa PEG and in particular 15 kDa mPEG it is intended to indicate a compound (or in fact a mixture of compounds) with a polydisperisty index below 1.06, such as below 1.05, such as below 1.04, such as below 1.03, such as between 1.02 and 1.03. When reference is made to 20 kDa PEG and in particular 20 kDa mPEG it is intended to indicate a compound (or in fact a mixture of compounds) with a polydisperisty index below 1.06, such as below 1.05, such as below 1.04, such as below 1.03, such as between 1.02 and 1.03. When reference is made to 30 kDa PEG and in particular 30 kDa mPEG it is intended to indicate a compound (or in fact a mixture of compounds) with a polydisperisty index below 1.06, such as below 1.05, such as below 1.04, such as below 1.03, such as between 1.02 and 1.03. When reference is made to 40 kDa PEG and in particular 40 kDa mPEG it is intended to indicate a compound (or in fact a mixture of compounds) with a polydisperisty index below 1.06, such as below 1.05, such as below 1.04, such as below 1.03, such as between 1.02 and 1.03. When reference is made to 60 kDa PEG and in particular 60 kDa mPEG it is intended to indicate a compound (or in fact a mixture of compounds) with a polydisperisty index below 1.06, such as below 1.05, such as below 1.04, such as below 1.03, such as between 1.02 and 1.03.

## DETAILED DESCRIPTION OF THE INVENTION

The overall reaction of the methods of the present invention may be described by the following reaction sequence

$$R^1\text{-LG (II)} + \text{H-}R^2\text{-O-NH-Pg (III)} \xrightarrow{1} R^1\text{-}R^2\text{-O-NH-Pg (IV)} \xrightarrow{2} R^1\text{-}R^2\text{-O-}NH_2\text{ (I)}$$

In one embodiment, the method of the invention can be described by the following reaction sequence:

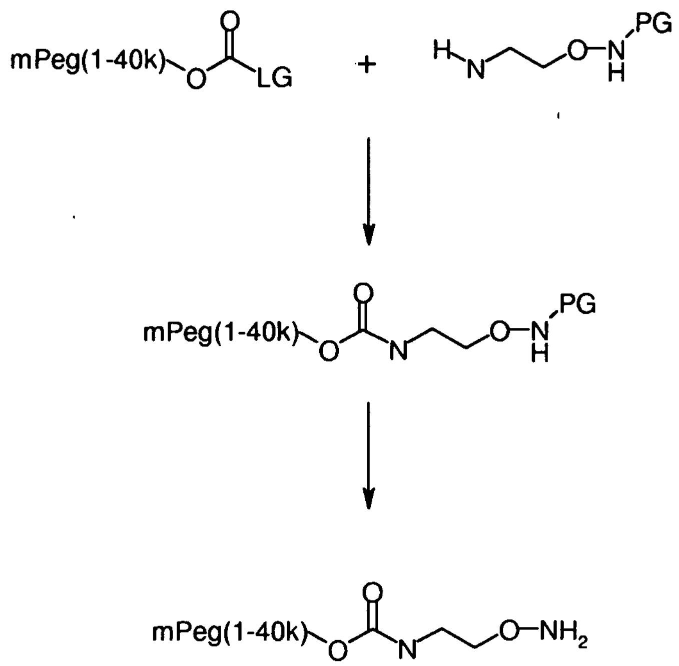

LG in the compound of formula (II) represents a leaving group for nucleophilic displacement. Examples of LG include halide, azide, N-succinimidyloxy, 1-imidazolyl, 1-triazolyl, 1-tetrazolyl, N-benzotriazolyloxy, N-phthalimidyloxy, phenyloxy, and 4-nitrophenyloxy.

In a particular embodiment, the method of the invention can be described by the folllowing reaction sequence:

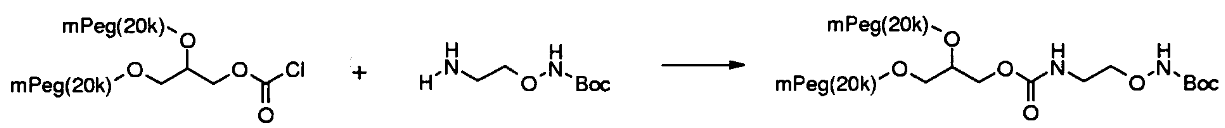

The compound of formula (III) is added in excess over the compound of formula II in order to drive the acylation reaction (reaction 1) to completion in a reasonable time. Typically, the excess is 1.5 - 300 fold, such as 2 -10 fold.

The compounds of formula (III) and (IV) comprise a protecting group, Pg, to protect the amine functionality during the reaction. Typical examples of protecting groups know in the art includes Boc, Fmoc, Cbz, Bpoc, Mpc, Ddz, Adpoc, Azoc, Alloc, and Troc. It is preferred to use protective groups Pg, which enable final deprotection under mild conditions, which do not harm the final product of the reaction, and furthermore only yield volatile by-products during the deprotection, which are easy to remove, e.g. under reduced pressure. Examples of such Pg include Boc, Cbz and Alloc.

The acylation reaction may be conducted in a suitable solvent, such as dichloromethane, chloroform, tetrachlorocarbon, carbon disulfide, nitrobenzene, acetonitrile, ethyl acetate, propionitrile, chlorobenzene, toluene, or in a solvent mixture, optionally in the presence of a catalyst or a base, such as DIPEA, DMAP, triethylamine, or pyridine to accelerate the reaction. Particular mentioning is made of dichloromethane.

Before removal of the protective group Pg, it is of critical importance to remove the excess amine (of formula

(III)), because this compound yields, upon deprotection, an alkoxylamine which will compete with the compound of formula (I) in the condensation reaction with the peptide-derived aldehyde or ketone, leading to low yields of the desired condensation product. The present invention provides a practical method for the removal of amine (III). This method yields highly pure products of general formula (I), and represents a significant improvement compared with the lengthy and tedious procedures reported in the literature. The purity of the products of general formula (I) is essential if high yields of condensation products with peptide-derived aldehydes or ketones are to be obtained.

The removal of the excess of compound (III) from the compound of formula (IV) can be achieved by treatment of a solution of the crude product (IV) in a suitable solvent, such as dichloromethane, chloroform or water, with a sufficient amount of an acidic ion exchange resin, such as Amberlyst 15, Amberlyst 36, Amberjet 1200(H), Amberlite IR-120, Amberlite IRC-50, Amberlite IRP, Dowex 50WX, Dowex HCRW2, Dowex 650C, Dowex DR-2030, or Dowex HCR-S for between 1 min and several hours, *e.g.* 1, 2, 3, 4, 5, or 10 hours. Particular mentioning is made of dichloromethane as solvent. Filtration, rinsing of the ion exchange resin and concentration or lyophylization of the combined filtrates yields the product (IV), devoid of reagent (III) or other, basic by-products or catalysts.

In addition to the removal of reagent (III) by treatment with an acidic ion exchange resin, intermediate (IV) may be purified by precipitation from diethyl ether, by recrystallization from isopropanol, by ion-exchange chromatography, by dialysis, or by other methods applicable to the purification of PEG-derivatives, well known to those skilled in the art. For each intermediate any of these purification methods may be used. The purified intermediate (IV) can then be subjected to the conditions required for the removal of the protective group Pg and then, after an optional purification, be used for the derivatization of a peptide derived aldehyde or ketone.

The removal of protecting groups is well-known in the art. By way of example, treatment with TFA will remove acid-labile protecting groups such as Boc.

Particular examples of compounds of formula I include

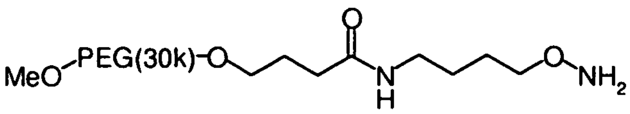

,

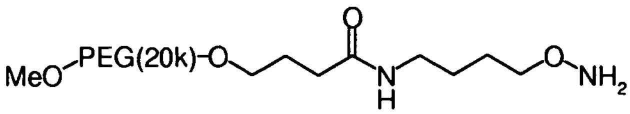

,

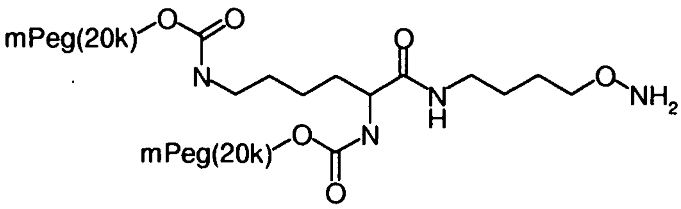

,

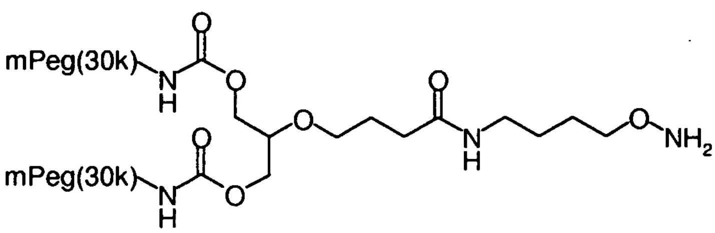

,

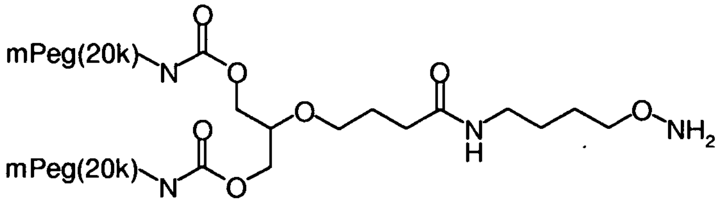

,

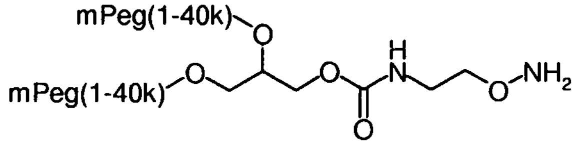

,

and

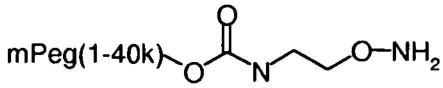

.

## EXAMPLES

The following abbreviations are used

| | |
|---|---|
| Boc: | tert-butyloxycarbonyl |
| Fmoc: | 9-fluorenylmethyloxycarbonyl |
| Cbz: | benzyloxycarbonyl |
| Bpoc: | 1-(4-biphenylyl)-1-methylethoxycarbonyl |
| Mpc: | 1-(4-methylphenyl)-1-methylethoxycarbonyl |
| Ddz: | 1-(3,5-dimethoxyphenyl)-1-methylethoxycarbonyl |
| Adpoc: | 1-(1-adamantyl)-1-methylethoxycarbonyl |
| Alloc: | allyloxycarbonyl |
| Troc: | 2,2,2-trichloroethyloxycarbonyl |
| DIPEA: | diisopropylethylamine |
| DMAP: | 4-dimethylaminopyridine |
| TFA: | trifluoroacetic acid |

An exemplary method of the present invention, starting from readily available starting materials, is depicted in the reaction scheme below.

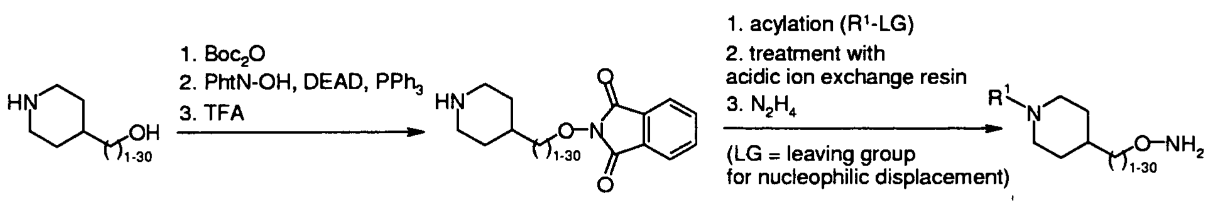


,

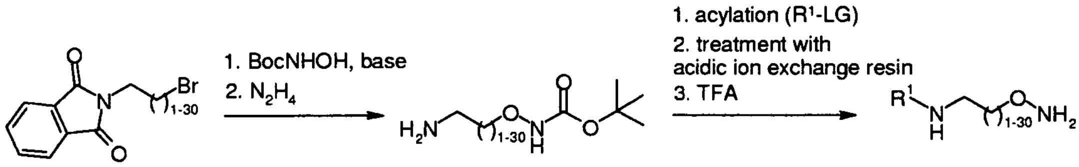


**Example 1:**

**O-(4-(4-(1,3-bis(mPEG(20K)oxy)-2-propyloxy)butyrylamino)butyl)hydroxylamine**

(a) *N*-(*tert*-Butyloxycarbonylaminoxybutyl)phthalimide

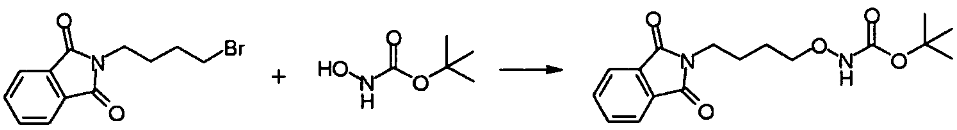

282.14 133.15 334.37

To a stirred mixture of *N*-(4-bromobutyl)phthalimide (18.9 g, 67.0 mmol), MeCN (14 ml), and *N*-Boc-hydroxylamine (12.7 g, 95.4 mmol) was added DBU (15.0 ml, 101 mmol) in portions. The resulting mixture was stirred at 50 °C for 24 h. Water (300 ml) and 12 M HCl (10 ml) were added, and the product was extracted three times with AcOEt. The combined extracts were washed with brine, dried ($MgSO_4$), and concentrated under reduced pressure. The resulting oil (28 g) was purified by chromatography (140 g $SiO_2$, gradient elution with heptane/AcOEt). 17.9 g (80%) of the title compound was obtained as an oil. $^1$H NMR (DMSO-$d_6$) δ 1.36 (s, 9H), 1.50 (m, 2H), 1.67 (m, 2H), 3.58 (t, *J* = 7 Hz, 2H), 3.68 (t, *J* = 7 Hz, 2H), 7.85 (m, 4H), 9.90 (s, 1 H).

(b) 4-(*tert*-Butyloxycarbonylaminoxy)butylamine

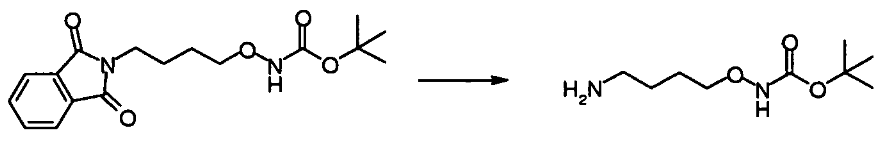

334.37 204.27

To a solution of *N*-(*tert*-butyloxycarbonylaminoxybutyl)phthalimide obtained from (a) (8.35 g, 25.0 mmol) in EtOH (10 ml) was added hydrazine hydrate (20 ml), and the mixture was stirred at 80 °C for 38 h. The mixture was concentrated and the residue coevaporated with EtOH and PhMe. To the residue was added EtOH (50 ml), and the precipitated phthalhydrazide was filtered off and washed with EtOH (50 ml). Concentration of the combined filtrates yielded 5.08 g of an oil. This oil was mixed with a solution of $K_2CO_3$ (10 g) in water (20 ml), and the product was extracted with $CH_2Cl_2$. Drying ($MgSO_4$) and concentration yielded 2.28 g (45%) of the title compound as an oil, which was used without further purification. $^1$H NMR (DMSO-$d_6$) δ 1.38 (m, 2H), 1.39 (s, 9H), 1.51 (m, 2H), 2.51 (t, *J* = 7 Hz, 2H), 3.66 (t, *J* = 7 Hz, 2H).

(c) N-Boc-O-(4-(4-(1,3-bis(mPEG(20K)oxy)-2-propyloxy)butyrylamino)butyl)hydroxylamine

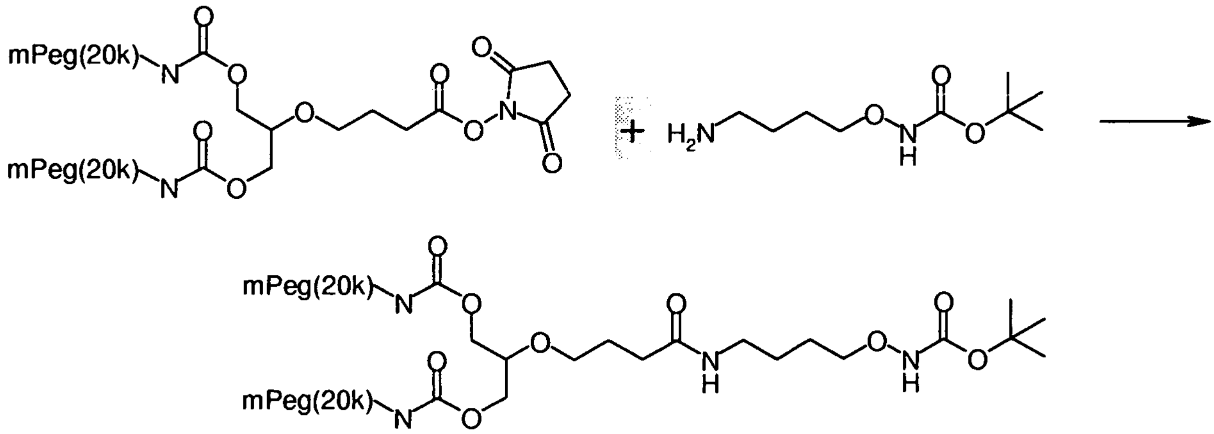

(mPeg-NH-CO-O-$CH_2$)$_2$CH-O-($CH_2$)$_3$-CO-OSu (Nektar, 2Z3Y0T01, 2.0 g, 50 μmol) was mixed with a solution of 4-(Boc-aminoxy)butylamine (187 mg, 915 μmol) in DCM (12 ml) . After stirring at room temperature for 43 h the mixture was added dropwise to stirred $Et_2O$ (200 ml). Filtration, washing with $Et_2O$. The product was redissolved in DCM (10 ml), and precipitated once more from $Et_2O$ (200 ml). This precipitation was repeated three times. The product was then dissolved in DCM (100 ml) and treated with Amberlyst 15 (11 g; washed with DCM) for 5 min. After filtration and concentration the product was precipitated from $Et_2O$ as above. Filtration and drying under reduced pressure yielded 1.98 g of the title compound as a solid.

(d) O-(4-(4-(1,3-bis(mPEG(20K)oxy)-2-propyloxy)butyrylamino)butyl)hydroxylamine

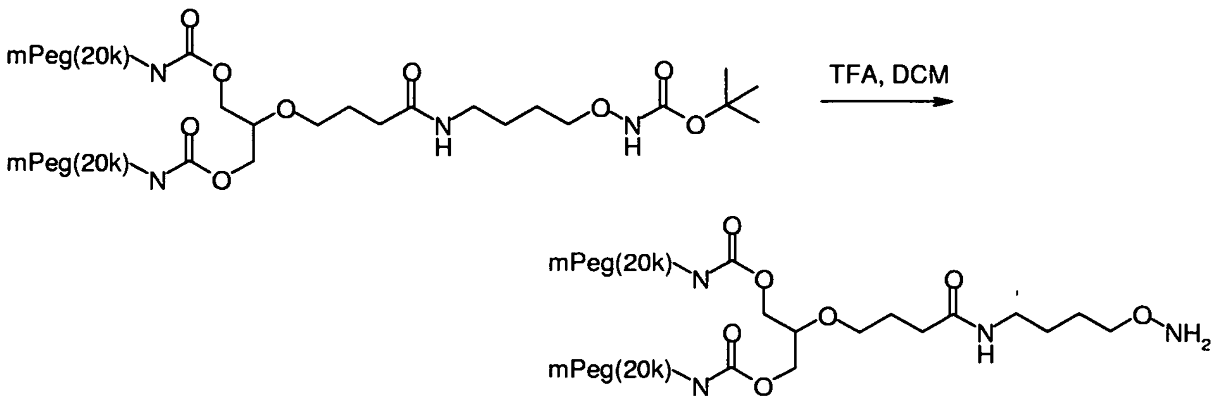


The product from the previous reaction (1.98 g) was dissolved in DCM, and Amberlyst 15 (7.5 g; washed with DCM) was added. After stirring for 5 min the mixture was filtered and the filtrate concentrated. To the residue were added DCM (40 ml) and TFA (40 ml). After standing at room temperature for 0.5 h the mixture was concentrated, the residue coevaporated twice with a mixture of DCM and toluene, and dried under reduced pressure overnight. The residue was dissolved in water (33 ml) and neutralized by addition of 2-methylpyridine (1.5 ml) to pH 5-6. This solution was used directly for the oximation of protein-derived aldehydes.

All references, including publications, patent applications and patents, cited herein are hereby incorporated by reference to the same extent as if each reference was individually and specifically indicated to be incorporated by reference and was set forth in its entirety herein.

All headings and sub-headings are used herein for convenience only and should not be construed as limiting the invention in any way,

Any combination of the above-described elements in all possible variations thereof is encompassed by the invention unless otherwise indicated herein or otherwise clearly contradicted by context.

The terms "a" and "an" and "the" and similar referents as used in the context of describing the invention are to be construed to cover both the singular and the plural, unless otherwise indicated herein or clearly contradicted by context.

Recitation of ranges of values herein are merely intended to serve as a shorthand method of referring individually to each separate value falling within the range, unless otherwise indicated herein, and each separate value is incorporated into the specification as if it were individually recited herein. Unless otherwise stated, all exact values provided herein are representative of corresponding approximate values (*e.g.*, all exact exemplary values provided with respect to a particular factor or measurement can be considered to also provide a corresponding approximate measurement, modified by "about," where appropriate).

All methods described herein can be performed in any suitable order unless otherwise indicated herein or otherwise clearly contradicted by context.

The use of any and all examples, or exemplary language (*e.g.*, "such as") provided herein, is intended merely to better illuminate the invention and does not pose a limitation on the scope of the invention unless otherwise indicated. No language in the specification should be construed as indicating any element is essential to the practice of the invention unless as much is explicitly stated.

The citation and incorporation of patent documents herein is done for convenience only and does not reflect any view of the validity, patentability and/or enforceability of such patent documents,

The description herein of any aspect or embodiment of the invention using terms such as "comprising", "having", "including" or "containing" with reference to an element or elements is intended to provide support for a similar aspect or embodiment of the invention that "consists of", "consists essentially of", or "substantially comprises" that particular element or elements, unless otherwise stated or clearly contradicted by context (*e.g.*, a composition described herein as comprising a particular element should be understood as also describing a composition consisting of that element, unless otherwise stated or clearly contradicted by context).

This invention includes all modifications and equivalents of the subject matter recited in the aspects or claims presented herein to the maximum extent permitted by applicable law.

## Claims

**1.** A method for preparing a compound according to formula I,

$$R^1\text{-}R^2\text{-O-NH}_2 \qquad (I)$$

wherein $R^1$ is a monovalent acyl radical of formula

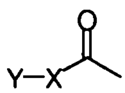

,

wherein X represents a bond, arylene, $(CH_2)_{1-10}$, NH, O, S, or combinations thereof, and
Y represents a branched or unbranched PEG-derived radical having a mean molecular weight between 100 Da and 80 kDa; and
$R^2$ is a diradical of formula

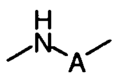

,

wherein A represents arylene, alkylene, cycloalkylene, heteroarylene, partially or completely saturated heteroarylene, or combinations thereof, each of which optionally substituted with a lower alkyl, the method comprising the steps of

(i) treating a compound of formula II

$$R^1\text{-LG} \qquad (II),$$

wherein LG represents a leaving group for nucleophilic displacement, with an excess of a compound of formula III

$$H\text{-}R^2\text{-}O\text{-}NH\text{-}Pg \qquad (III)$$

wherein Pg represent a protective group in a suitable solvent or solvent mixture;
(ii) isolating any compound of formula (IV)

$$R^1\text{-}R^2\text{-}O\text{-}NHPg \qquad (IV);$$

and
(iii) removing the protective group to obtain a compound of formula I.

**2.** The method of claim 1, wherein $R^1$ represents

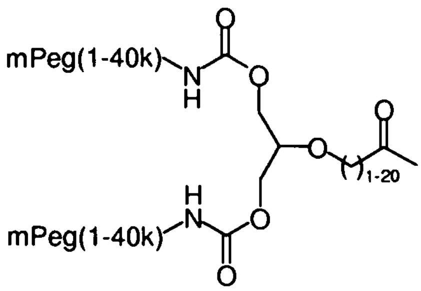
,
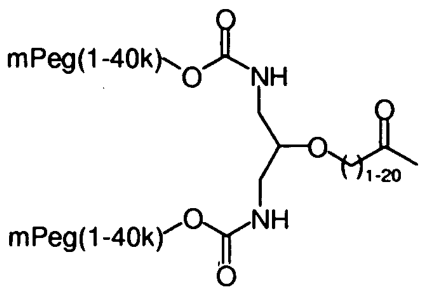
,
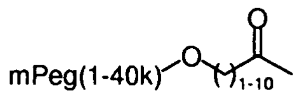
,
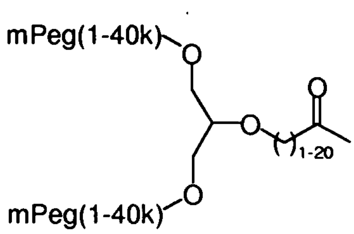
,
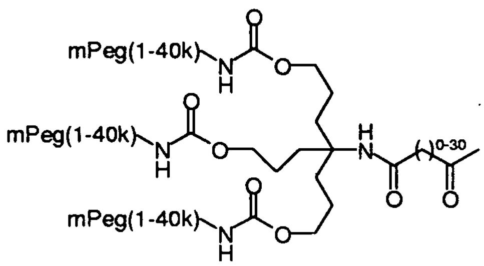
,
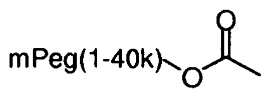
,
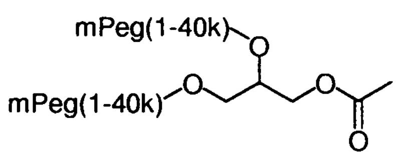
,
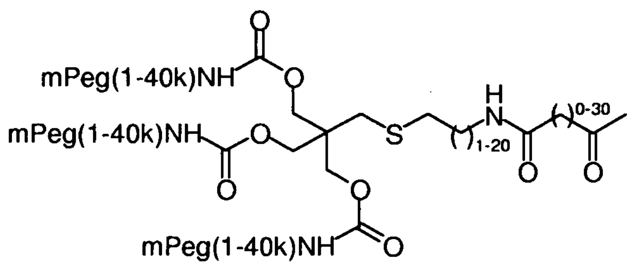
,

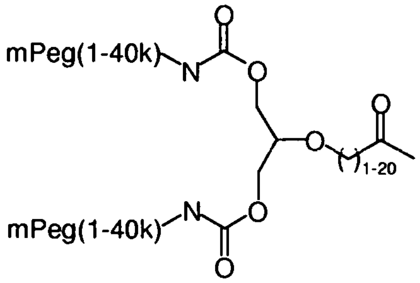

,

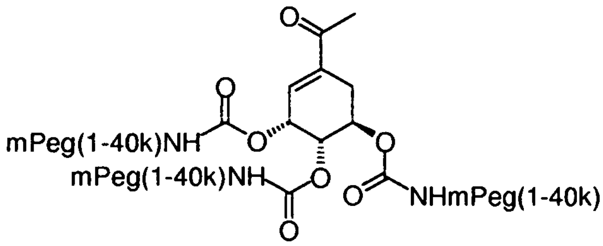

,

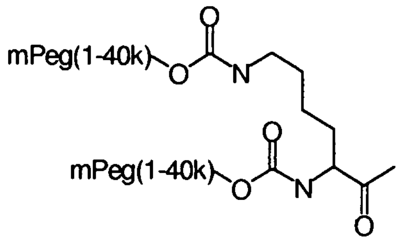

,

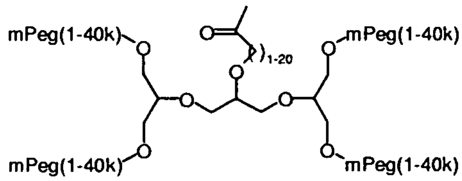

,

or

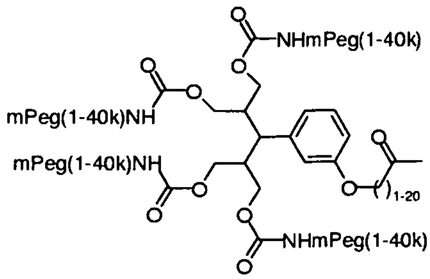

,

and

$R^2$ represents

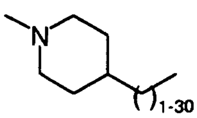

,

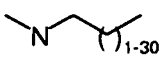

,

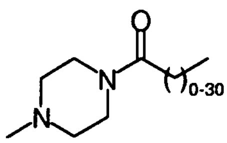

, or

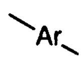

wherein Ar represents arylene or heteroarylene, each of which optionally substituted with one or more substituents selected from carboxy, hydroxyl, nitro, or cyano.

**3.** The method of any of claims 1 and 2, wherein $R^1$ is

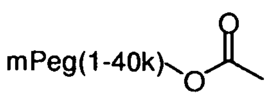

and $R^2$ is

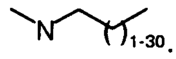

4. The method of any of claims 1 to 3, wherein $R^1$ is

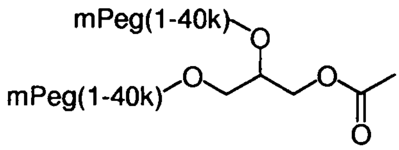

and $R^2$ is

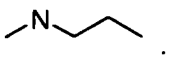

5. The method of any of claims 1 to 4, wherein the isolating step (ii) comprises a precipitation step wherein a large amount of a first precipitating solvent is added to the reaction mixture in (i), in which solvent the compound of formula IV is essentially insoluble and in which the reaction solvent and the compound of general formula III are soluble.

6. The method of claim 5, further comprising a step of filtration to isolate the precipitate comprising the compound of formula IV.

7. The method of claim 6, further comprising adding to the isolated precipitate a solvent in which the compound of formula IV is soluble.

8. The method of claim 7, further comprising adding a suspension of an acidic ion exchange resin in a suitable solvent, stirring the resulting mixture for a predetermined amount of time, followed by filtration and rinsing of the ion exchange resin, and collection and optionally concentration of the combined filtrates.

9. The method of claim 8, further comprising optionally adding a second precipitating solvent to precipitate the compound of formula IV.

10. The method of any of claims 1-9, wherein Pg in the compound of formula (III) is Boc.

11. The method of any of claims 1 to 10, wherein the solvent in step (i) is dichloromethane.

12. The method of any of claims 1 to 11, wherein the excess of the compound of formula (III) is 1.5- to 300-fold.

13. The method of claim 5, wherein the first precipitating solvent is diethylether.

14. The method of claim 8, wherein the predetermined amount of time is from 1 min to 10 hours.

15. A method for the preparation of compounds accordingly to formula I,

$$R^1\text{-}R^2\text{-O-NH}_2 \qquad (I)$$

wherein $R^1$ represents

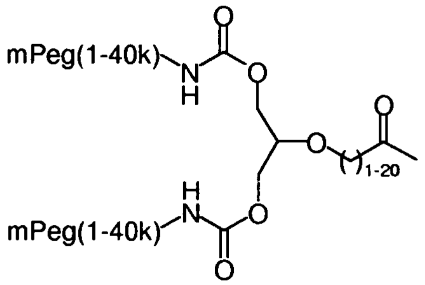
,
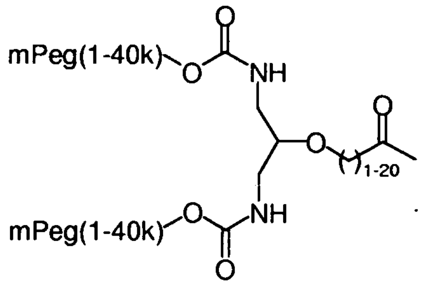
,
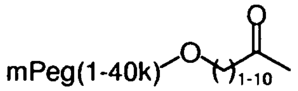
,

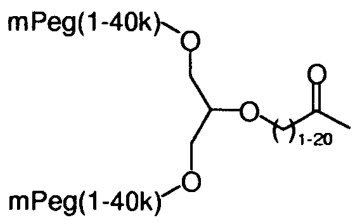
,
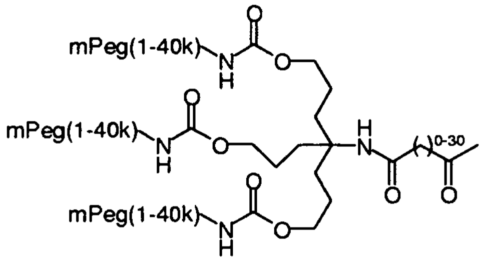
,
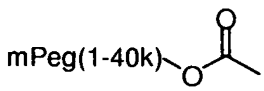
,

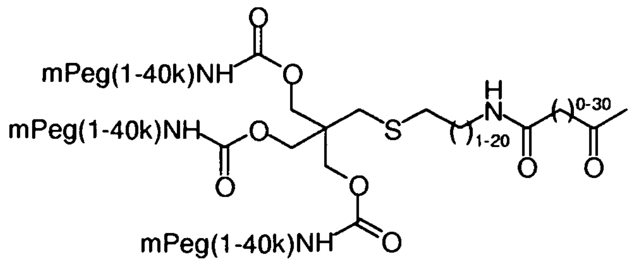
,
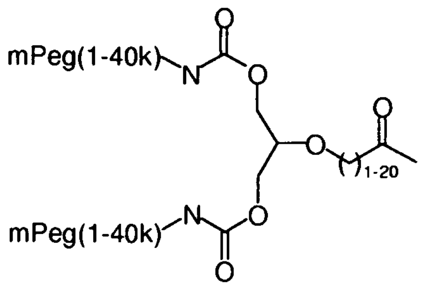
,

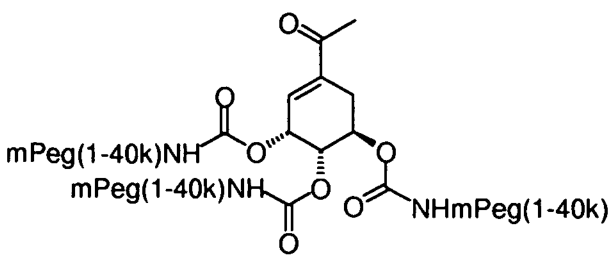
,
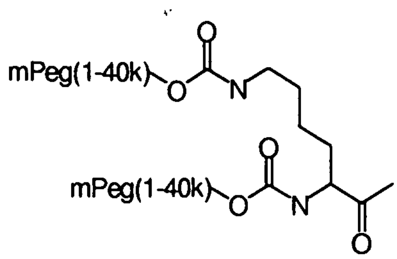
,

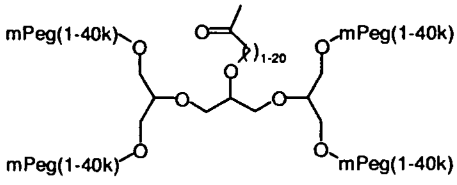
, or
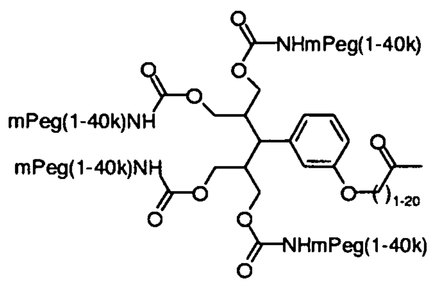
;

$R^2$ represents

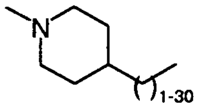, 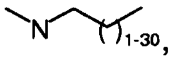, 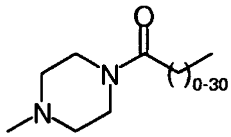, or 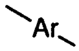

wherein Ar represents arylene or heteroarylene, both of which may optionally be substituted with one or more substituents selected from carboxy, hydroxyl, nitro, or cyano, the method comprising the steps of

(a) treating a compound of formula II

$R^1$-LG (II),

wherein LG represents a leaving group for nucleophilic displacement, with an excess of a compound of the formula (III)

H-$R^2$-O-NH-Pg (III),

wherein Pg represent a protective group in a suitable solvent or solvent mixture, followed by
(b) precipitation of the product obtained in (a) by addition a large amount of a suitable solvent, in which the compound of formula (IV) is essentially insoluble, and the reaction solvent and the compound of general formula (III) are soluble, wherein the compound of formula IV is the compound of formula I with a protection group, *i.e.*

$R^1$-$R^2$-O-NHPg (IV)

followed by,
(c) isolation of the compound of formula (IV) by filtration, followed by
(d) addition of a suitable solvent in which the compound of formula (IV) is soluble to the product isolated in step (c), followed by
(e) optional repetition of the precipitation, filtration and solubilisation steps of (b) and (c), followed by
(f) addition of a suspension of an acidic ion exchange resin in a suitable solvent, stirring the resulting mixture, followed by filtration and rinsing of the ion exchange resin, and collection and optionally concentration of the combined filtrates, followed by
(g) optional addition of a suitable solvent to precipitate the compound of formula (IV), followed by filtration and solubilisation as described in steps (b) and (c), followed by
(h) removal of the protective group with a suitable reagent to obtain a compound of formula I, and optional removal of the solvent and un-reacted reagent.

**16.** The method of claim 15, wherein the protective group in the compound of formula (III) is Boc.

**17.** The method of any of claims 15 and 16, wherein the solvent in step (a) is dichloromethane.

**18.** The method of any of claims 15 to 17, wherein the excess of the compound of formula (III) is 1.5 to 300 fold.

**19.** The method of any of claims 15 to 18, wherein the solvent in step (b) is diethylether.

**20.** The method of any of claims 15 to 19, wherein the resulting mixture is stirred for 1 min to 10 hours.

**21.** The method of any of claims 15 to 20, which further comprises an ion exchange chromatography step.

**22.** The method of any of claims 15 to 21, which further comprises a step, wherein the compounds are recrystallised from isopropanol.

**23.** The method of any of claims 15 to 22, which further comprises a dialysis step.

## Patentansprüche

1. Verfahren zur Herstellung einer Verbindung der Formel I,

$$R^1\text{-}R^2\text{-O-NH}_2 \qquad \text{(I)}$$

wobei $R^1$ für einen einwertigen Acylrest der Formel

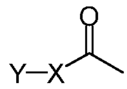

steht,
wobei X eine Bindung, Arylen, $(CH_2)_{1\text{-}10}$, NH, O, S oder Kombinationen davon darstellt und
Y einen verzweigten oder unverzweigten von PEG abgeleiteten Rest mit einem mittleren Molekulargewicht zwischen 100 Da und 80 kDa darstellt und
$R^2$ für einen Direst der Formel

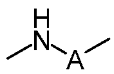

steht,
wobei A Arylen, Alkylen, Cycloalkylen, Heteroarylen, teilweise oder vollständig gesättigtes Heteroarylen oder Kombinationen davon darstellt,
wobei jedes davon wahlweise substituiert ist mit einem Niederalkyl, wobei das Verfahren die folgenden Schritte umfasst:

(i) Behandeln einer Verbindung der Formel II

$$R^1\text{-LG} \qquad \text{(II)},$$

wobei LG eine Abgangsgruppe zur nukleophilen Verdrängung darstellt, mit einem Überschuss einer Verbindung der Formel III

$$\text{H-}R^2\text{-O-NH-Pg} \qquad \text{(III)}$$

wobei Pg eine Schutzgruppe darstellt, in einem geeigneten Lösungsmittel oder Lösungsmittelgemisch;
(ii) Isolieren von jeglicher Verbindung der Formel (IV)

$$R^1\text{-}R^2\text{-O-NHPg} \qquad \text{(IV)};$$

und
(iii) Entfernen der Schutzgruppe zum Erhalt einer Verbindung der Formel I.

2. Verfahren nach Anspruch 1, wobei $R^1$

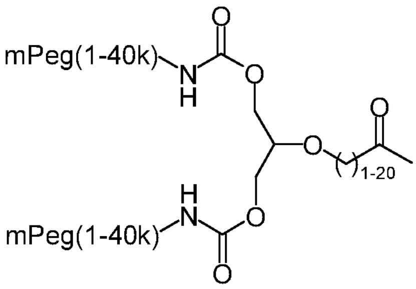
,

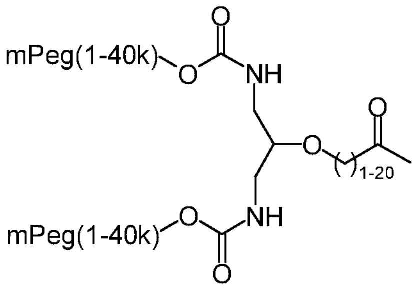
,

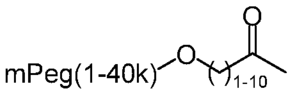
,

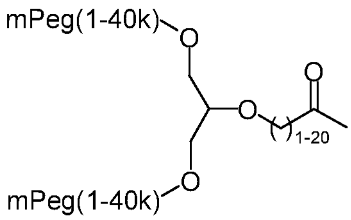
,

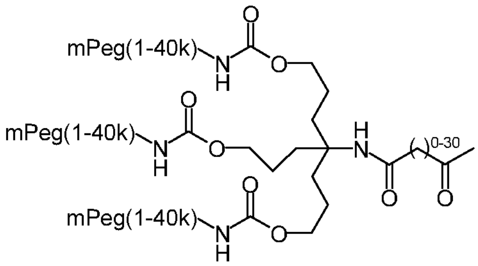
,

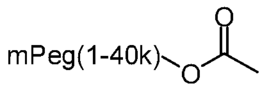
,

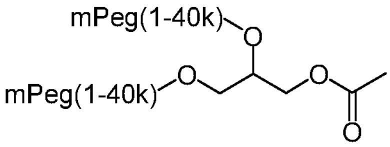
,

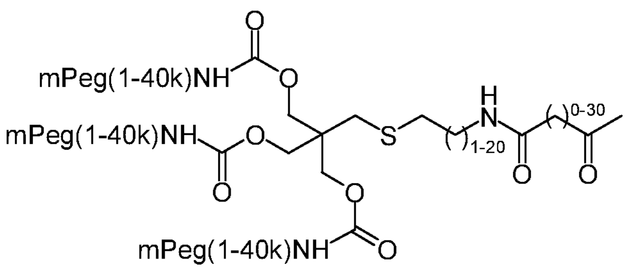
,

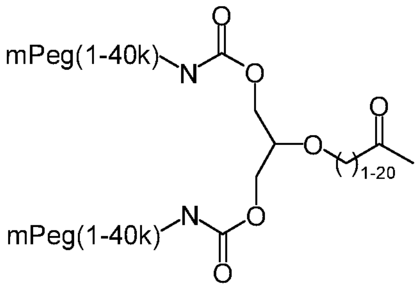

,

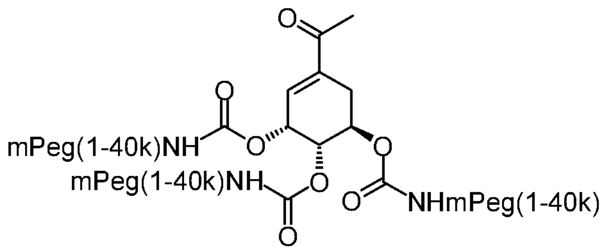

,

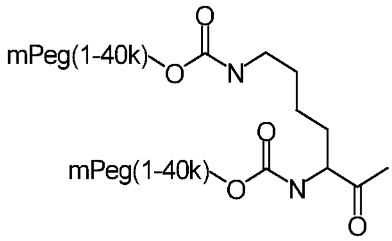

,

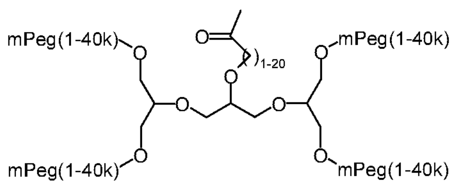

oder

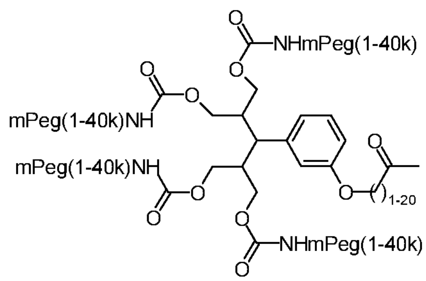

darstellt und

$R^2$

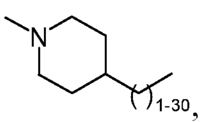

,

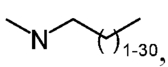

,

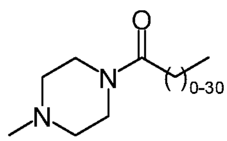

oder

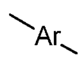

darstellt
wobei Ar Arylen oder Heteroarylen darstellt, wobei jedes davon wahlweise substituiert ist mit einem oder mehreren Substituenten, ausgewählt aus Carboxy, Hydroxy, Nitro oder Cyano.

**3.** Verfahren nach einem der Ansprüche 1 und 2, wobei $R^1$ für

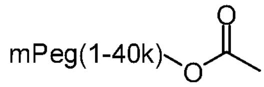

steht und $R^2$ für

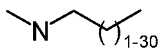

steht.

**4.** Verfahren nach einem der Ansprüche 1 bis 3, wobei $R^1$ für

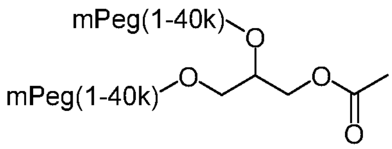

steht und $R^2$ für

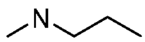

steht.

**5.** Verfahren nach einem der Ansprüche 1 bis 4, wobei der Schritt des Isolierens (ii) einen Ausfällungsschritt umfasst, in welchem eine große Menge eines ersten Ausfällungslösungsmittels dem Reaktionsgemisch in (i) zugesetzt wird, wobei in dem Lösungsmittel die Verbindung der Formel IV im Wesentlichen unlöslich ist und das Reaktionslösungsmittel und die Verbindung der allgemeinen Formel (III) löslich sind.

**6.** Verfahren nach Anspruch 5, ferner umfassend einen Filtrationsschritt zum Isolieren des die Verbindung der Formel IV umfassenden Niederschlags.

**7.** Verfahren nach Anspruch 6, ferner umfassend das Zusetzen eines Lösungsmittels, in welchem die Verbindung der Formel IV löslich ist, zu dem isolierten Niederschlag.

**8.** Verfahren nach Anspruch 7, ferner umfassend das Zusetzen einer Suspension eines sauren Ionenaustauschharzes in einem geeigneten Lösungsmittel, Rühren des erhaltenen Gemischs für eine vorher bestimmte Zeitdauer, gefolgt von Filtration und Spülen des Ionenaustauschharzes und Auffangen und wahlweise Einengen der vereinigten Filtrate.

**9.** Verfahren nach Anspruch 8, ferner umfassend das wahlweise Zusetzen eines zweiten Ausfällungslösungsmittels zum Ausfällen der Verbindung der Formel IV.

**10.** Verfahren nach einem der Ansprüche 0 bis 9, wobei Pg in der Verbindung der Formel (III) für Boc steht.

**11.** Verfahren nach einem der Ansprüche 1 bis 10, wobei es sich bei dem Lösungsmittel in Schritt (i) um Dichlormethan handelt.

**12.** Verfahren nach einem der Ansprüche 1 bis 11, wobei der Überschuss der Verbindung der Formel (III) 1,5- bis 300-fach ist.

**13.** Verfahren nach Anspruch 5, wobei es sich bei dem ersten Ausfällungslösungsmittel um Diethylether handelt.

**14.** Verfahren nach Anspruch 8, wobei die vorher bestimmte Zeitdauer 1 Min. bis 10 Stunden beträgt.

**15.** Verfahren zur Herstellung von Verbindungen der Formel I,

$$R^1\text{-}R^2\text{-O-NH}_2 \qquad (I)$$

wobei $R^1$

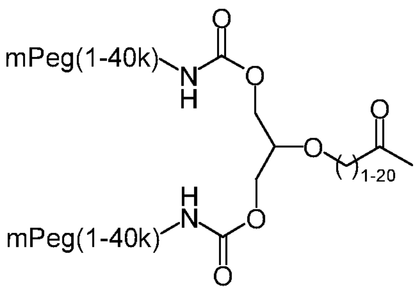
,
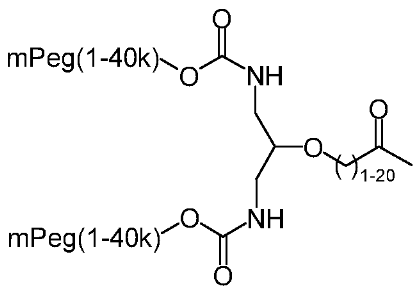
,

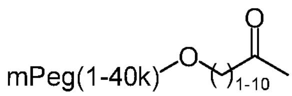
,
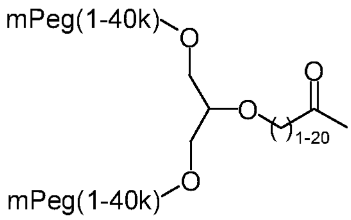
,

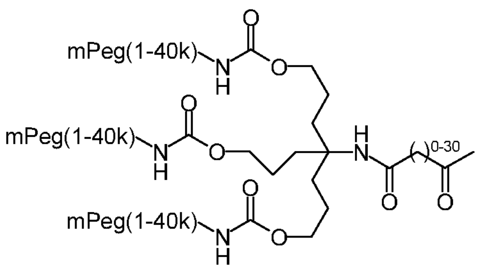
,
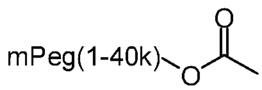
,

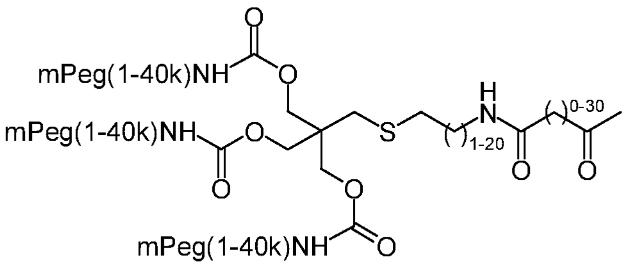

,

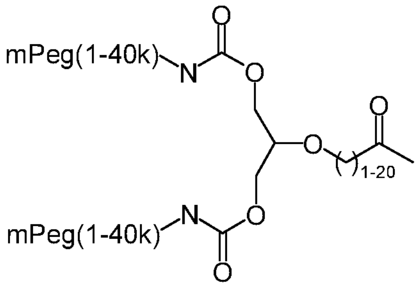

,

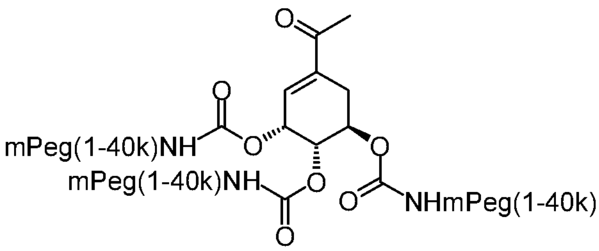

,

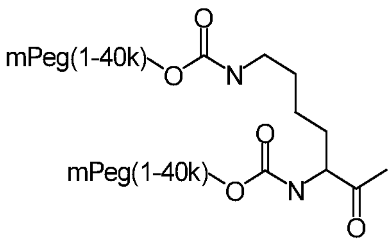

,

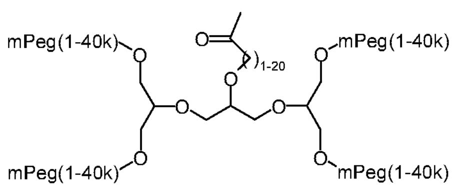

oder

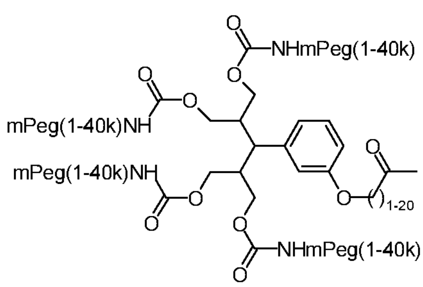

darstellt;
$R^2$

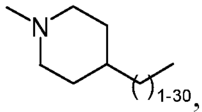, 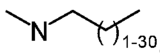, 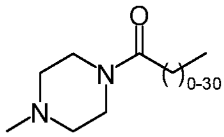 oder 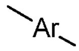

darstellt,
wobei Ar Arylen oder Heteroarylen darstellt, wobei beide davon wahlweise substituiert sein können mit einem oder mehreren Substituenten, ausgewählt aus Carboxy, Hydroxy, Nitro oder Cyano, wobei das Verfahren die folgenden Schritte umfasst:

(a) Behandeln einer Verbindung der Formel II

$R^1$-LG (II),

wobei LG eine Abgangsgruppe zur nukleophilen Verdrängung darstellt, mit einem Überschuss einer Verbindung der Formel (III)

H-$R^2$-O-NH-Pg (III),

wobei Pg eine Schutzgruppe darstellt, in einem geeigneten Lösungsmittel oder Lösungsmittelgemisch, gefolgt von
(b) Ausfällung des in (a) erhaltenen Produkts durch Zusetzen einer großen Menge eines geeigneten Lösungsmittels, in welchem die Verbindung der Formel (IV) im Wesentlichen unlöslich und das Reaktionslösungsmittel und die Verbindung der allgemeinen Formel (III) löslich sind, wobei es sich bei der Verbindung der Formel IV um die Verbindung der Formel I mit einer Schutzgruppe, d.h.

$R^1$-$R^2$-O-NHPg (IV)

handelt, gefolgt von
(c) Isolierung der Verbindung der Formel (IV) durch Filtration, gefolgt von
(d) Zusetzen eines geeigneten Lösungsmittels, in welchem die Verbindung der Formel (IV) löslich ist, zu dem in Schritt (c) isolierten Produkt, gefolgt von
(e) wahlweiser Wiederholung der Ausfällungs-, Filtrations- und Anlösungsschritte von (b) und (c), gefolgt von
(f) Zusetzen einer Suspension eines sauren Ionenaustauschharzes in einem geeigneten Lösungsmittel, Rühren des erhaltenen Gemischs, gefolgt von Filtration und Spülen des Ionenaustauschharzes und Auffangen und wahlweisem Einengen der vereinigten Filtrate, gefolgt von
(g) wahlweisem Zusetzen eines geeigneten Lösungsmittels zum Ausfällen der Verbindung der Formel (IV), gefolgt von Filtration und Anlösung wie in den Schritten (b) und (c) beschrieben, gefolgt von
(h) Entfernen der Schutzgruppe mit einem geeigneten Reagens zum Erhalt einer Verbindung der Formel I und wahlweisem Entfernen des Lösungsmittels und von nicht umgesetztem Reagens.

**16.** Verfahren nach Anspruch 15, wobei es sich bei der Schutzgruppe in der Verbindung der Formel (III) um Boc handelt..

**17.** Verfahren nach einem der Ansprüche 15 und 16, wobei es sich bei dem Lösungsmittel in Schritt (a) um Dichlormethan handelt.

**18.** Verfahren nach einem der Ansprüche 15 bis 17, wobei der Überschuss der Verbindung der Formel (III) 1,5- bis 300-fach ist.

**19.** Verfahren nach einem der Ansprüche 15 bis 18, wobei es sich bei dem Lösungsmittel in Schritt (b) um Diethylether handelt.

**20.** Verfahren nach einem der Ansprüche 15 bis 19, wobei das erhaltene Gemisch für eine Dauer von 1 Min. bis 10

Stunden gerührt wird.

**21.** Verfahren nach einem der Ansprüche 15 bis 20, das ferner einen Ionenaustauschchromatographieschritt umfasst.

**22.** Verfahren nach einem der Ansprüche 15 bis 21, das ferner einen Schritt umfasst, in welchem die Verbindungen aus Isopropanol umkristallisiert werden.

**23.** Verfahren nach einem der Ansprüche 15 bis 22, das ferner einen Dialyseschritt umfasst.

**Revendications**

**1.** Procédé de préparation d'un composé de formule I,

$$R^1\text{-}R^2\text{-O-NH}_2 \quad \text{(I)}$$

dans laquelle $R^1$ est un radical acyle monovalent de formule

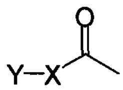
,

dans laquelle X représente une liaison, un radical arylène, $(CH_2)_{1-10}$, NH, O, S, ou une combinaison de ceux-ci, et Y représente un radical dérivé du PEG, à chaîne droite ou ramifiée, ayant une masse moléculaire moyenne comprise entre 100 Da et 80 kDa ; et
$R^2$ est un diradical de formule

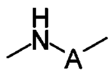
,

dans laquelle A représente un radical arylène, alkylène, cycloalkylène, hétéroarylène, hétéroarylène partiellement ou complètement saturé, ou des combinaisons de ceux-ci, chacun d'eux étant en option substitué par un groupe alkyle inférieur, le procédé comprenant les étapes de :

(i) traitement d'un composé de formule II

$$R^1\text{-LG} \quad \text{(II)},$$

dans laquelle LG représente un groupe éliminable pour déplacement nucléophile, avec un excès d'un composé de formule III

$$\text{H-}R^2\text{-O-NH-Pg} \quad \text{(III)}$$

dans laquelle Pg représente un groupe protecteur, dans un solvant approprié ou dans un mélange de solvants appropriés ;
(ii) isolement de tout composé de formule (IV)

$$R^1\text{-}R^2\text{-O-NHPg} \quad \text{(IV)};$$

et
(iii) élimination du groupe protecteur pour obtenir un composé de formule I.

**2.** Procédé selon la revendication 1, dans lequel $R^1$ représente

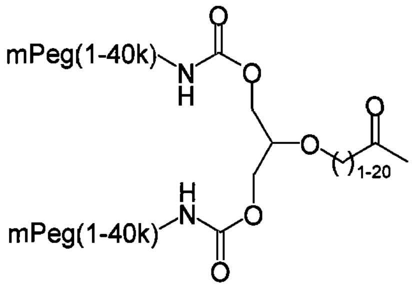,

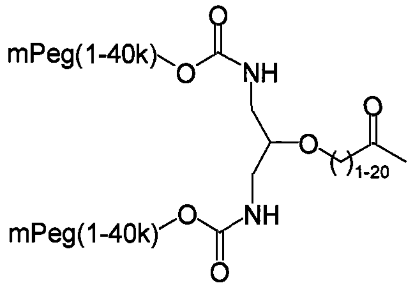,

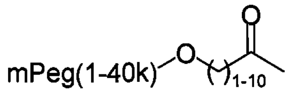,

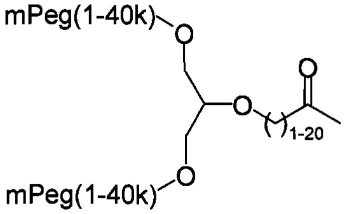,

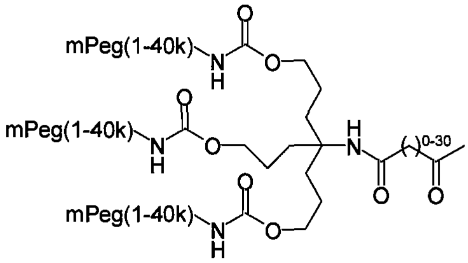,

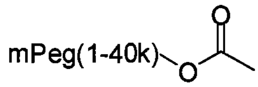,

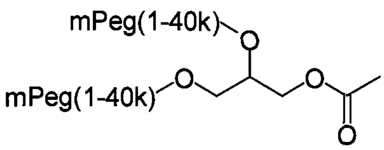,

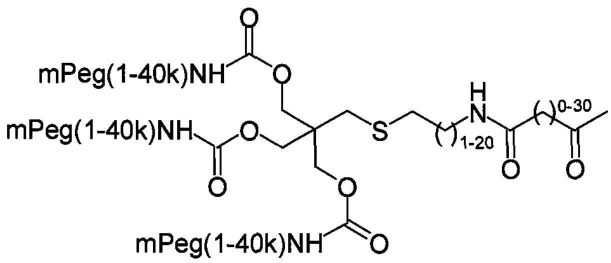,

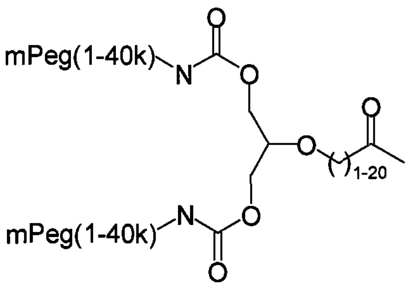,

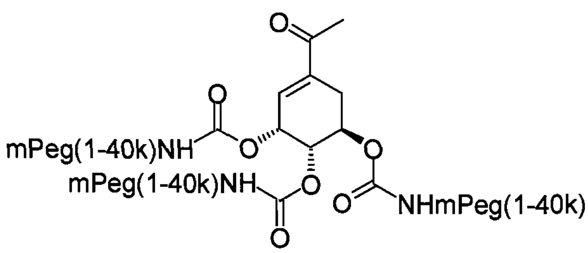,

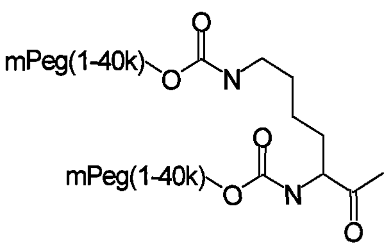,

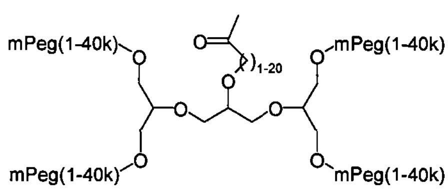,

or

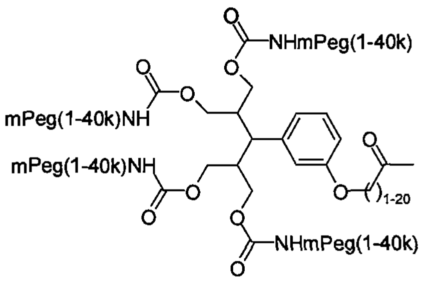

,

et

$R^2$ représente

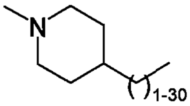, 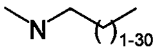, 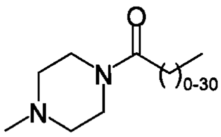, ou 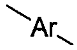

où Ar représente un radical arylène ou hétéroarylène, dont chacun est en option substitué par un ou plusieurs substituants choisis parmi les groupes carboxy, hydroxyle, nitro ou cyano.

**3.** Procédé selon l'une quelconque des revendications 1 et 2, dans lequel $R^1$ est

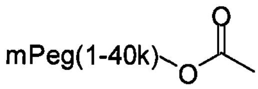

et $R^2$ est

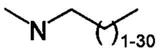.

**4.** Procédé selon l'une quelconque des revendications 1 à 3, dans lequel $R^1$ est

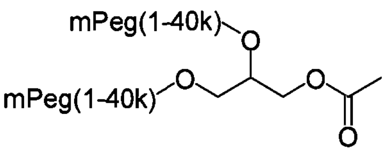

et $R^2$ est

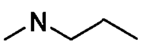.

**5.** Procédé selon l'une quelconque des revendications 1 à 4, dans lequel l'étape d'isolement (ii) comprend une étape de précipitation au cours de laquelle une grande quantité d'un premier solvant de précipitation est ajoutée au mélange

réactionnel de (i), dans lequel le solvant de formule IV est essentiellement insoluble, et dans lequel le solvant de réaction et le composé de formule générale III sont solubles.

**6.** Procédé selon la revendication 5, qui comprend en outre une étape de filtration pour isoler le précipité contenant le composé de formule IV.

**7.** Procédé selon la revendication 6, qui consiste en outre à ajouter au précipité isolé un solvant dans lequel le composé de formule IV est soluble.

**8.** Procédé selon la revendication 7, qui comprend en outre l'addition d'une suspension d'une résine échangeuse d'ions sous forme acide dans un solvant approprié, l'agitation du mélange ainsi obtenu pendant un laps de temps prédéterminé, puis une filtration et un rinçage de la résine échangeuse d'ions, et la collecte et en option la concentration des filtrats combinés.

**9.** Procédé selon la revendication 8, qui comprend en outre l'addition en option d'un deuxième solvant de précipitation, pour provoquer la précipitation du composé de formule IV.

**10.** Procédé selon l'une quelconque des revendications 1 à 9, dans lequel Pg, dans le composé de formule (III), est Boc.

**11.** Procédé selon l'une quelconque des revendications 1 à 10, dans lequel le solvant de l'étape (i) est le dichlorométhane.

**12.** Procédé selon l'une quelconque des revendications 1 à 11, dans lequel l'excès du composé de formule (III) est de 1,5 à 300 X.

**13.** Procédé selon la revendication 5, dans lequel le premier solvant de précipitation est le diéthyléther.

**14.** Procédé selon la revendication 8, dans lequel le laps de temps prédéterminé est de 1 minute à 10 heures.

**15.** Procédé de préparation de composés de formule I,

$$R^1\text{-}R^2\text{-O-NH}_2 \qquad (I)$$

dans laquelle $R^1$ représente

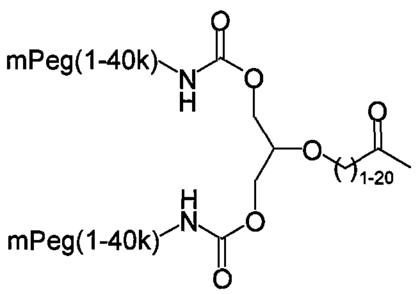
,
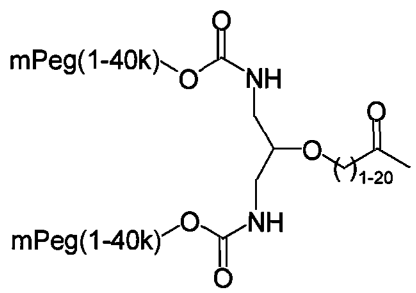
,
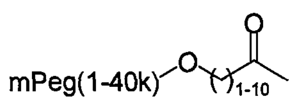
,

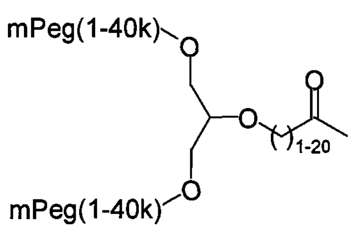
,
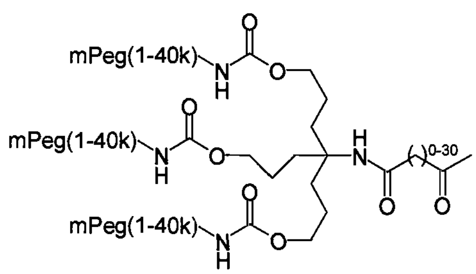
,
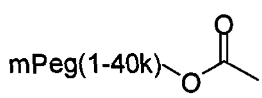
,

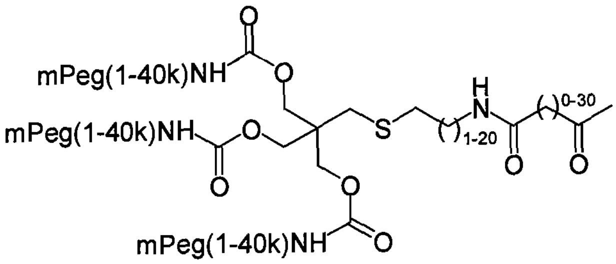,
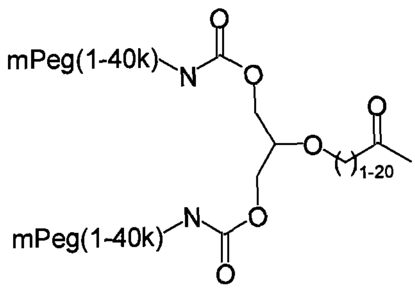,

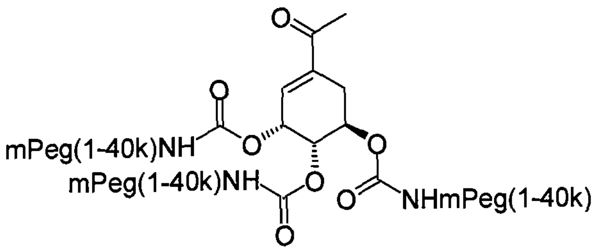,
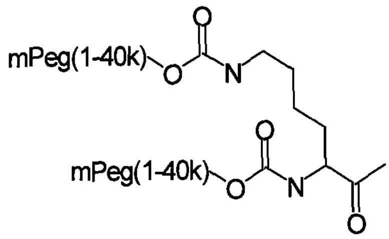,

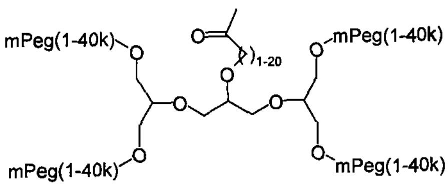, ou
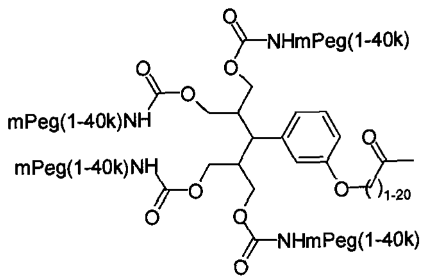;

$R^2$ représente

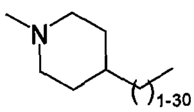, 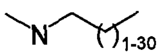, 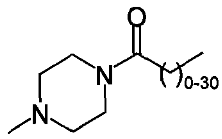, ou 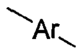

où Ar représente un radical arylène ou hétéroarylène, ces deux derniers radicaux pouvant en option être substitués par un ou plusieurs substituants choisis parmi les groupes carboxy, hydroxyle, nitro ou cyano, le procédé comprenant les étapes de :

(a) traitement d'un composé de formule II

$R^1$-LG (II),

dans laquelle LG représente un groupe partant pour déplacement nucléophile, avec un excès d'un composé de formule (III)

H-$R^2$-O-NH-Pg (III),

dans laquelle Pg représente un groupe protecteur dans un solvant approprié ou dans un mélange de solvants appropriés, puis

(b) précipitation du produit obtenu en (a) par addition d'une grande quantité d'un solvant approprié dans lequel le composé de formule (IV) est essentiellement insoluble et le solvant de réaction et le composé de formule générale (III) sont solubles, où le composé de formule IV est le composé de formule I avec un groupe protecteur, *à savoir*

$R^1$-$R^2$-O-NHPg (IV)

puis

(c) isolement du composé de formule (IV) par filtration, puis

(d) addition, au produit isolé dans l'étape (c), d' un solvant approprié dans lequel le composé de formule (IV) est soluble, puis

(e) en option, répétition des étapes de précipitation, de filtration et de solubilisation de (b) et de (c), puis

(f) addition d'une suspension d'une résine échangeuse d'ions sous forme acide dans un solvant approprié, agitation du mélange obtenu, puis filtration et rinçage de la résine échangeuse d'ions, et collecte et en option concentration des filtrats combinés, puis

(g) en option, addition d'un solvant approprié pour provoquer la précipitation du composé de formule (IV), puis filtration et solubilisation comme décrit dans les étapes (b) et (c), puis

(h) élimination du groupe protecteur avec un réactif approprié, pour obtenir un composé de formule I, et en option élimination du solvant et du réactif n'ayant pas réagi.

**16.** Procédé selon la revendication 15, dans lequel le groupe protecteur du composé de formule (III) est Boc.

**17.** Procédé selon l'une quelconque des revendications 15 à 16, dans lequel le solvant de l'étape (a) est le dichlorométhane.

**18.** Procédé selon l'une quelconque des revendications 15 à 17, dans lequel l'excès du composé de formule (III) est de 1,5 à 300 X.

**19.** Procédé selon l'une quelconque des revendications 15 à 18, dans lequel le solvant de l'étape (b) est le diéthyléther.

**20.** Procédé selon l'une quelconque des revendications 15 à 19, dans lequel le mélange obtenu est agité pendant 1 minute à 10 heures.

**21.** Procédé selon l'une quelconque des revendications 15 à 20, qui comprend en outre une étape de chromatographie par échange d'ions.

**22.** Procédé selon l'une quelconque des revendications 15 à 21, qui comprend en outre une étape dans laquelle les composés sont recristallisés dans de l'isopropanol.

**23.** Procédé selon l'une quelconque des revendications 15 à 22, qui comprend en outre une étape de dialyse.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **ROBERTS, M.J.** *Adv. Drug Deliv. Rev.,* 2002, vol. 54, 459-476
- **KINSTLER, O. et al.** *Adv. Drug Deliv. Rev.,* 2002, vol. 54, 477-485
- **GAERTNER ; OFFORD.** *Bioconjugate Chem.,* 1996, vol. 7, 38-44
- **JACOBSON et al.** *J. Org. Chem.,* 1987, vol. 52, 2592